# EUROPÄISCHE PATENTANMELDUNG

(11) **EP 0 977 024 A1**
(43) Veröffentlichungstag der Anmeldung: **02.02.2000**
(21) Anmeldenummer: 98810731.4
(22) Anmeldetag: 30.07.1998
(51) Int. Cl.: G01K 17/06

(54) **Verfahren zur Montage eines Energieverbrauchs-Messgerät und Messgerät zur Durchführung dieses Verfahrens**

(71) Anmelder: Bernina Electronic AG, 8266 Steckborn (CH)
(72) Erfinder: Anderegg, Christian, 8500 Frauenfeld (CH)
(74) Vertreter: AMMANN PATENTANWAELTE AG BERN

(57) **Zusammenfassung**

Zum Anbringen eines Energieverbrauchs-Messgerätes (3) an einem Verbraucher, beispielsweise einem Heizkörper (1), wird am Heizkörper (1) zuerst eine Montageplatte (2) untrennbar angebracht. Sodann wird das Energieverbrauchs-Messgerät (3) auf die Montageplatte (2) aufgeschnappt, wobei eine Manipulationssicherung, beispielsweise eine Plombe (4), in das Messgerät (3) von vorneherein bei der Fabrikation eingebaut ist und ohne weitere Manipulation bei der beschriebenen Montage wirksam wird oder bleibt. Die Montage wird damit besonders einfach. Da die Manipulationssicherung schon bei der Fabrikation angebracht wird, können Manipulationen zwischen der Fabrikation und der Montage verhindert oder erschwert werden.

## Beschreibung

Die vorliegende Erfindung betrifft ein Verfahren gemäss Oberbegriff des Anspruchs 1. Solche Geräte, insbesondere neuerdings elektronische Messgeräte, sind bekannt, zum Beispiel aus EP-A-0499583. Solche Messgeräte dienen als Grundlage für die verbrauchsabhängige Verteilung von Energiekosten, insbesondere Heizkosten, wobei diese Geräte an einer zugänglichen Stelle aller, beispielsweise in einer Wohnung oder einem Büro vorhandenen Heizkörper angebracht werden. Diese Geräte sind also sichtbar und zugänglich und es besteht dauernd die Versuchung diese Geräte irgendwie zu manipulieren, um den zu entrichtenden Kostenanteil zu senken.

Um unbefugte Manipulationen an den Messgeräten zwecks Verfälschung der Messergebnisse zu verunmöglichen, beziehungsweise erkennen zu können, werden daher derartige Geräte nach der Montage am Verbraucher, zum Beispiel einem Heizkörper, mit einer Manipulationssicherung, insbesondere einer Plombe versehen. Mindestens diese Sicherung oder aber das Gerätegehäuse wird bei Manipulationen soweit zerstört, dass der Versuch einer Manipulation sogleich ersichtlich wird.

Die Montage bekannter Energieverbrauchs-Messgeräte erfordert mehrere Arbeitsgänge, nämlich:
- entfernungssichere Befestigung einer Montageplatte am Verbraucher
- Aufsetzen des Messgerätes auf die Montageplatte und Verbinden des Gerätes mit der Platte
- Anbringen der Manipulationssicherung, beispielsweise einer Plombe am montierten Energieverbrauchs-Messgerät.

Da innerhalb einer Wohnung oder in Geschäftsräumen oder gar in Mehrfamilienhäusern oder ganzen Siedlungen, beziehungsweise grossen Geschäftshäusern, in der Regel eine Vielzahl einzelner Verbraucher, insbesondere Heizkörper, vorhanden sind, welche mit Messgeräten zu versehen sind, ist ein erheblicher Zeitaufwand für die Montage erforderlich. Zudem sind die Montageverhältnisse, besonders auf Baustellen oder an schwer zugänglichen Stellen, oft recht schwierig, was den Zeitaufwand für die Montage der Messgeräte zusätzlich erhöht. Aus verständlichen Gründen ist die Manipulationssicherung vorzugsweise an einer nicht ohne weiteres sichtbaren und leicht zugänglichen Stelle angebracht, was das nachträgliche Anbringen dieser Sicherung erschwert. Zudem schliesst das Anbringen einer Sicherung erst nach der Montage des Energieverbrauchs-Messgerätes die Möglichkeit nicht aus, dass zwischen der eigentlichen Herstellung des Gerätes und dessen definitiver Montage eine Manipulation erfolgen könnte, die nachträglich nicht mehr feststellbar ist.

Ziel vorliegender Erfindung ist es, die Montage von Energieverbrauchs-Messgeräten zu vereinfachen und damit den Zeitaufwand für die Montage herabzusetzen. Vorzugsweise wird zugleich eine höhere Sicherheit gegen Manipulationen vor der Montage und zur Feststellung erfolgter Manipulationen angestrebt. Diese Ziele werden erreicht gemäss dem Kennzeichen des Anspruchs 1, beziehungsweise des Anspruchs 5, welcher ein Messgerät zur Durchführung des erfindungsgemässen Verfahrens betrifft. Da die Manipulationssicherung bereits bei der Herstellung des Messgerätes eingebaut und damit das Gehäuse des Messgerätes endgültig verschlossen und plombiert wird, fällt das Anbringen einer Sicherung, zum Beispiel Plombierung bei der Montage des Messgerätes, weg. Ein unbefugter Eingriff in das Messgerät, zwischen dessen Fertigung und Montage, ist auch nur unter Zerstörung, entweder der Sicherung oder des Gerätegehäuses, möglich. Schliesslich können Massnahmen getroffen werden, um eventuelle Manipulationen, beziehungsweise Defekte, ohne eigentliche Überprüfung des Messgerätes vor Ort, festzustellen.

Die Erfindung wird nun anhand von Ausführungsbeispielen näher erläutert. In der Zeichnung zeigen:
- Figur 1: schematisch die Montage eines Energieverbrauchs-Messgerätes an einem Verbraucher in herkömmlicher Weise,
- Figur 2: die Montage eines erfindungsgemässen Energieverbrauchs-Messgerätes an einem Verbraucher,
- die Figuren 3 und 4: eine Rückansicht eines Messgerätes, beziehungsweise dessen Montage auf einer Montageplatte,
- die Figuren 5 und 6: schematisch das Einsetzen einer Plombe in ein Energieverbrauchs-Messgerät während der Herstellung,
- Figur 7: einen vergrösstern Ausschnitt D aus Figur 6 und
- Figur 8: den Aufbau der Plombe.

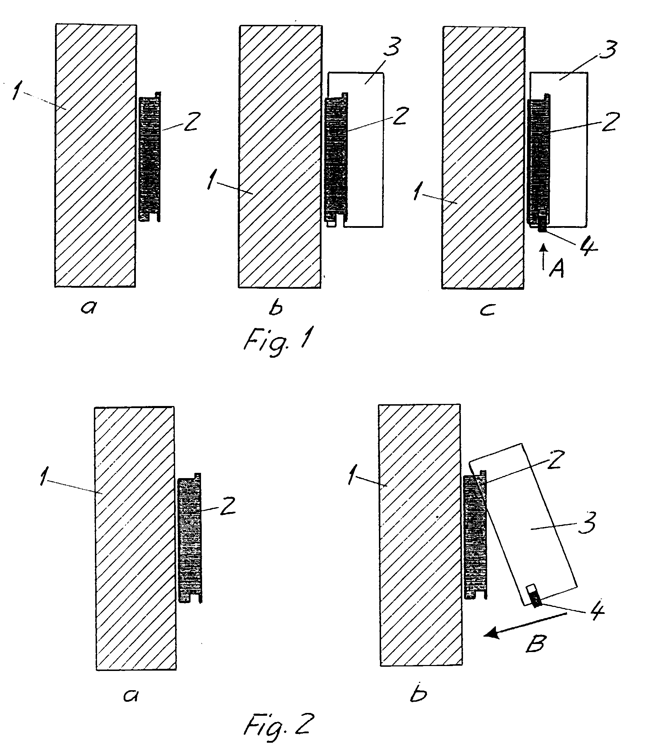

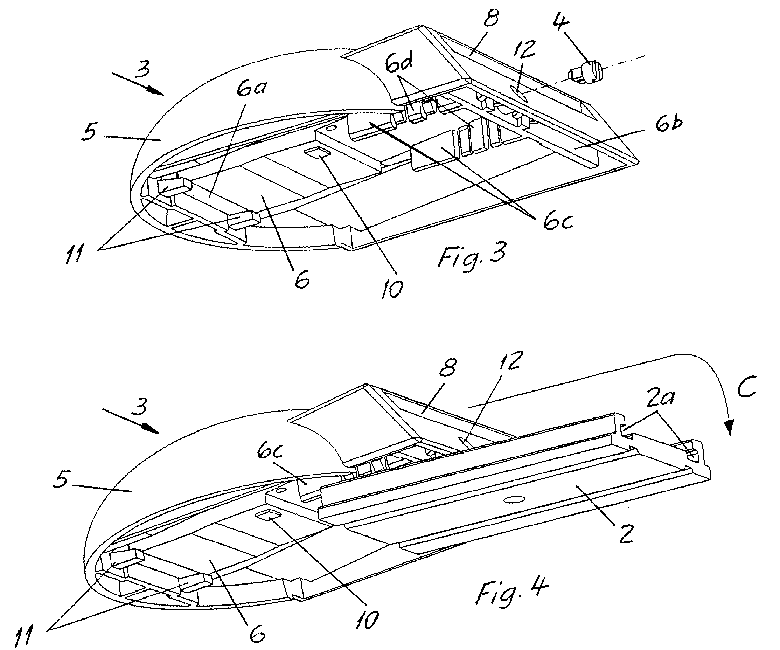

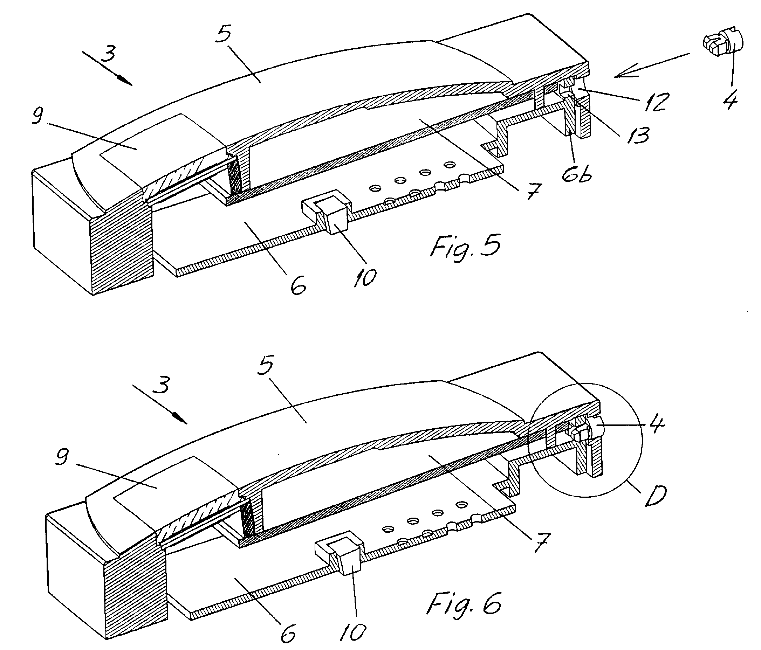

Figur 1 zeigt die herkömmliche Montage eines Energieverbrauchs-Messgerätes an einem Verbraucher (1). Gemäss Figur 1a wird zuerst am Verbraucher (1) eine Montageplatte (2) unlösbar angebracht. Gemäss Figur 1b wird sodann auf die Montageplatte (2) das Energieverbrauchs-Messgerät (3) von oben aufgesetzt und unten eingeschwenkt, und gemäss Figur 1c wird dann von unten, in Richtung des Pfeils A, eine Sicherung, beispielsweise eine Plombe (4), angebracht. Wie erwähnt bedeutet dieser letzte Vorgang eine Erschwerung der Montage, weil aus naheliegenden Gründen die Plombe an einer unsichtbaren und nicht leicht zugänglichen Stelle angebracht wird. Figur 2a zeigt die gleiche Vorbereitung wie Figur 1a, nämlich das Anbringen der Montageplatte (2) am Verbraucher (1) bei der erfindungsgemässen Montage eines Energieverbrauchs-Messgerätes. Gemäss Figur 2b ist nun das Messgerät (3) bereits mit einer Sicherung, beispielsweise einer Plombe (4), versehen und es kann vorzugsweise wie dargestellt zuerst von oben eingehängt oder aufgeschoben und dann am unteren Ende der Montageplatte (2) eingeschnappt werden (Pfeil B), wobei die Sicherung automatisch wirksam ist, beziehungsweise bleibt. Anhand der Ausführungsbeispiele wird näher erläutert wie eine solche Montage vor sich gehen könnte. Figur 3 zeigt ein erfindungsgemässes Messgerät (3) mit einem Gehäuseoberteil (5) und einer Bodenplatte(6). Im Gehäuseoberteil (5) befindet sich eine in den Figuren 3 und 4 nicht sichtbare, aber in den Figuren 5 und 6 schematisch dargestellte Leiterplatte (7), auf welcher sich die Messelektronik befindet. Eine derartige Messelektronik ist beispielsweise in der oben erwähnten EP-A-0499583 beschrieben und bedarf daher keiner näheren Darstellung oder Erläuterung. Am Gehäuseoberteil ist ein Kartenschacht (8) vorgesehen, durch welchen Karten zum Auslesen von Messdaten eingeführt werden können. Diese Karten können mit den ausgelesenen Daten vom Wohnungs- oder Büromieter an eine zentrale Rechnungsstelle übermittelt werden, wo der Energieverbrauch erfasst und abgerechnet wird. Am Gehäuseoberteil ist ein in den Figuren 5 und 6 dargestelltes Fenster (9) zur Anzeige bestimmter Daten vorgesehen. In der Bodenplatte (6) ist ein Wärmefühler (10) eingebaut, welcher bei montiertem Gerät an der gut wärmeleitenden Montageplatte (2) anliegt und somit die Temperatur des Verbrauchers (1) erfasst und ein entsprechendes Signal an die erwähnte Elektronik weiterleitet. Gemäss Figuren 3 und 4 ist die Bodenplatte (6) am vorderen Ende mit einem Flansch (6b) versehen. Das Gehäuseoberteil (5) ist mit Nocken (11) versehen, hinter welche das hintere Ende (6a) der Bodenplatte (6) eingeschoben wird. Die Mittel zur Verriegelung der Bodenplatte (6) mit dem Gehäuseoberteil (5), welche durch die durch eine Öffnung in der Rückwand des Gehäuseoberteils einführbare Plombe (4)erfolgt, werden später beschrieben. Diese Plombe wird während der Montage des Gerätes beim Hersteller bereits eingeführt, wodurch das montagefertige Gerät bereits bei der Herstellung derart gesichert ist, dass die Gehäuseteile (5 und 6) nur unter Zerstörung entweder von Gehäuseteilen oder der Plombe (4) getrennt und damit die aktiven Teile des Messgerätes zugänglich gemacht werden könnten. Zur Montage wird nun das Messgerät (3) gemäss Figur 4 im Sinne des Pfeils C auf die Montageplatte (2)aufgeschoben. Die Montageplatte (2) ist mit hinterschnittenen Nuten (2a) versehen. Wenn das Gerät ganz auf die Montageplatte aufgeschoben ist, greifen die Nocken (11), welche auch als Abstützungen für das hintere Ende (6a) der Bodenplatte (6) dienen, von links in Figur 4 in die Enden der Nuten (2a) ein und sichern dieses Ende der Bodenplatte (6), beziehungsweise des ganzen Gerätes, an der Montageplatte (2). Die Bodenplatte (6) ist im Bereiche, des den Nocken (11) gegenüberliegenden Endes beidseitig mit Führungsnocken (6c)und Haken (6d) versehen, welche nun dazu dienen, das Messgerät auf das in Figur 4 rechts liegende Ende der Montageplatte (2) aufzuschnappen, wobei die Führungsnocken (6c) das Gerät seitlich führen, während die Haken (6d) in die hinterschnittenen Nuten (2a) eingreifen und das Gerät unlösbar an der Montageplatte sichern. Es ist damit schon bei der Fabrikation des Gerätes dafür gesorgt, dass Manipulationen ohne Zerstörung des Gehäuses oder der Plombe (4) unmöglich sind, und nach der Montage des Gerätes bleiben diese Bedingungen bestehen. Es ist ausserdem unmöglich das Gerät ohne Zerstörung irgendwelcher Teile von der Montageplatte (2) zu entfernen.

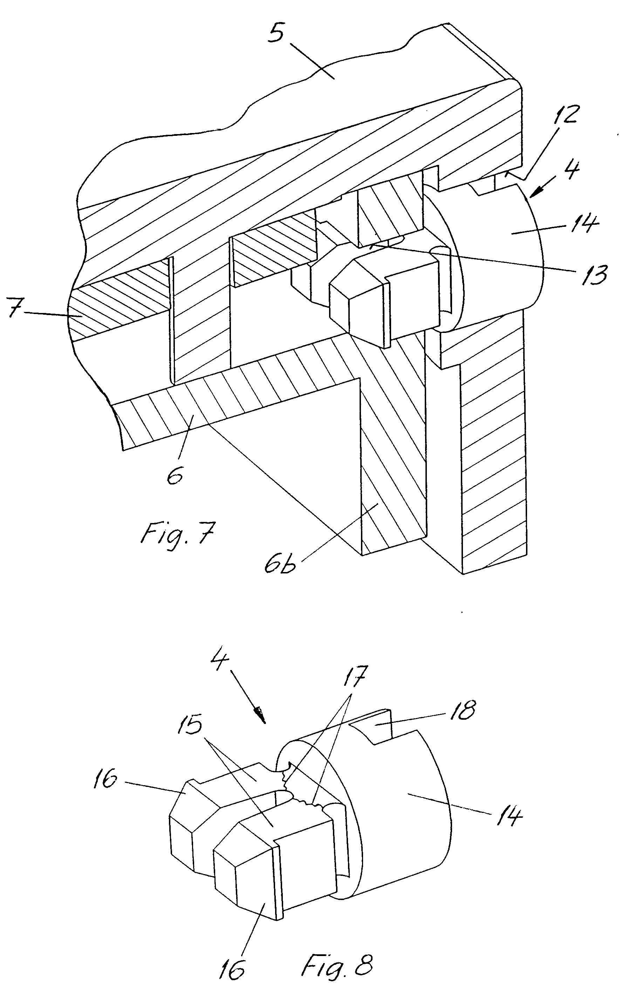

In den schematischen Darstellungen Figur 5 und Figur 6 sind gleiche Teile gleich bezeichnet wie in den vorgehenden Figuren. Es ist allerdings nur ein Flansch (6b) der Bodenplatte dargestellt, in dessen oberen Bereich sich eine rechteckige Öffnung (13) befindet, in welche die durch die Öffnung (12)des Gehäuseoberteils eingeführte Plombe (4) eingeschnappt werden kann. Die Plombe ist gemäss Figur 7 und 8 mit einem zylindrischen Kopf (14)und zwei Widerhaken (15,16) versehen. Beim Einführen der Plombe (4) durch die Öffnung (12) des Gehäuseoberteils (5) und die Öffnung (13) des Flansches (6b)der Bodenplatte(6)werden die Widerhaken (15,15) durch die Keilflächen am vorderen Ende der Widerhaken in der Öffnung (13) geführt und elastisch verformt, worauf die Widerhaken elastisch nach aussen springen und die Plombe (4)fest verankern, wenn die Plombe ihre innere Endstellung erreicht. Es wird damit unmöglich, die Plombe (4) wieder zu entfernen, ohne sie oder Gehäuseteile zu zerstören. Gemäss Figur 8 kann die Plombe mit Sollbruchstellen (17) zwischen dem Kopf (14) und den Widerhaken (15,16) und einem Schraubenschlitz (18)versehen sein. Bei der Wartung des Gerätes, beispielsweise zum Ersatz der die Elektronik speisenden Batterie, kann der Servicemonteur mit Hilfe eines Schraubenziehers den Kopf (14) der Plombe mit einem solchen Drehmoment verdrehen, dass die Widerhaken an den Sollbruchstellen (17) abbrechen. Damit ist die Verbindung zwischen dem Gehäuseoberteil (5) und der Bodenplatte (6)unterbrochen und das Gehäuse kann geöffnet werden. Nach der Wartung oder Reparatur wird eine neue Plombe (4) eingesetzt und damit wieder die ursprüngliche Sicherheit hergestellt.

Die Erfindung ist anhand eines elektronischen Messgerätes beschrieben worden, sie ist jedoch auch bei anderen, beispielswiese auf dem Verdunstungsprinzip beruhenden, Geräten anwendbar. Eingangs wurde erwähnt, dass die erfindungsgemässen Massnahmen Manipulationsversuche ausschliessen, beziehungsweise deren Entdeckung ermöglichen. Beim Gerät, nach der erwähnten EP-A-0499583 liegt allerdings die Zielsetzung zu Grunde, dass zur Erfassung des Energieverbrauchs überhaupt kein fremdes Personal eine Wohnung oder ein Büro oder sonstige Räumlichkeiten, wo sich Messgeräte befinden, betreten muss. Unter diesen Umständen könnte es bis zur nächsten fälligen Wartung dauern, bis eine eventuelle Manipulation festgestellt wird. Es wäre daher von Interesse, versuchte oder erfolgte Manipulation dadurch kenntlich zu machen,dass eine entsprechende Information im Speicher der Elektronik abgespeichert und dann ausgelesen wird oder dass die Elektronik endgültig ausgeschaltet wird. Spätestens bei der nächsten Ablesung würde dann festgestellt, dass manipuliert wurde, beziehungsweise, dass das Gerät überhaupt nicht mehr funktioniert und es müsste eine Überprüfung erfolgen. Man könnte beispielsweise die Plombe in elektrisch leitendem Kunststoff ausführen und deren Widerhaken (15,16) als Kontakte in einen Stromkreis schalten, dessen Unterbruch die erwähnten Folgen für die Elektronik hätte. Es wäre ferner eine Ausführung denkbar, bei welcher die Sicherung, zum Beispiel Plombe, nicht zwischen Gehäuseteilen des Messgerätes, sondern zwischen dem Gehäuse des Messgerätes und einer entsprechendend ausgebildeten Montageplatte wirken würde, wobei die im Gerät, bei dessen Herstellung, eingebaute Sicherung beim Aufschnappen des Gerätes auf die Montageplatte automatisch wirksam werden könnte.

Vorzugsweise ist nicht nur die Bodenplatte (6) sondern auch der Gehäuseoberteil (5) mit Führungsnocken und Haken zum Einschnappen in die Nuten (2a) der Montageplatte (2) versehen. Damit wird das ganze Gehäuse (5, 6) an der Montageplatte gesichert, und gewollt oder zufällig auf den Gehäuseoberteil wirkende Beanspruchungen werden nicht von der Plombe (4) sondern direkt von der Montageplatte (2) aufgenommen. Erst ein bewusstes, gewaltsames Öffnen des Gehäuses führt zur Beanspruchung und Zerstörung der Plombe (4).

## Patentansprüche

1. Verfahren zur Montage eines Energieverbrauchs-Messgerätes an einem Verbraucher (1), insbesondere an einem Heizkörper, wobei eine Plombe angebracht wird, die den Zugriff zu den aktiven Teilen des Messgerätes ohne Zerstörung der Plombe verhindert, dadurch gekennzeichnet, dass die Plombe (4) bei der Herstellung des Messgerätes (3) angebracht wird und ohne weitere Manipulation an der Plombe bei der Montage des Messgerätes wirksam ist.

2. Verfahren nach Anspruch 1, dadurch gekennzeichnet, dass die Plombe zwischen unter Zerstörung der Plombe trennbaren Gehäuseteilen (5, 6) des Messgerätes (3) angebracht wird.

3. Verfahren nach Anspruch 2, dadurch gekennzeichnet, dass die Plombe (4) zwischen einem Gehäuseeoberteil (5) und einem Gehäuseboden (6) angebracht und das Gehäuse (5, 6) bei der Montage auf eine Montageplatte (2) am Verbraucher (1) aufgeschnappt wird.

4. Messgerät zur Durchführung des Verfahrens nach Anspruch 1, dadurch gekennzeichnet, dass es im geschlossenen, montagebereiten Zustand eine Plombe (4) derart eingebaut aufweist, dass das Gehäuseinnere nur unter Zerstörung des Gehäuses (5, 6) oder der Plombe (4) zugänglich ist, und dass das Gehäuse (5, 6) ohne Manipulation an der Plombe (4) am Verbraucher (1) montierbar ist.

5. Messgerät nach Anspruch 4, dadurch gekennzeichnet, dass die Plombe (4) als Verbindungsglied zwischen einem Gehäuseboden (6) und einem Gehäuseoberteil (5) angebracht ist, und dass der Gehäuseboden (6) und der Gehäuseoberteil (5) auf eine Montageplatte (2) aufschnappbar sind.

6. Messgerät nach Anspruch 4 oder 5, dadurch gekennzeichnet, dass die Plombe (4) als Zapfen mit Widerhaken (15,16) ausgeführt ist.

7. Messgerät nach Anspruch 6, dadurch gekennzeichnet, dass zwei Widerhaken (15, 16) je über eine Sollbruchstelle mit einem zylindrischen Kopf (14) der Plombe (4) verbunden sind.

8. Messgerät nach Anspruch 6 oder 7, dadurch gekennzeichnet, dass der Kopf (14) einen Schraubenschlitz oder dergleichen aufweist.

9. Messgerät nach einem der Ansprüche 4 bis 8, dadurch gekennzeichnet, dass eine Montageplatte (2) mit hinterschnittenen Nuten (2a) vorgesehen ist, wobei das Gehäuse Nocken und/oder Haken (6d) aufweist, die zum Eingreifen in die Nuten (2a) bestimmt sind.
